# EUROPEAN PATENT SPECIFICATION

(11) **EP 4 371 851 B1**
(45) Date of publication and mention of the grant of the patent: **31.12.2025**
(21) Application number: 23209702.2
(22) Date of filing: 14.11.2023
(51) Int. Cl.: B62B 9/14, A45C 13/10

(54) **BABY CARRIER AND LOCKING MECHANISM THEREOF**
BABYTRAGE UND VERRIEGELUNGSMECHANISMUS DAFÜR
PORTE-BÉBÉ ET SON MÉCANISME DE VERROUILLAGE

(30) Priority: 15.11.2022 CN 202211429502
(43) Date of publication of application: 22.05.2024
(60) Divisional application: 25213012.5
(73) Proprietor: Wonderland Switzerland AG, 6312 Steinhausen (CH)
(72) Inventor: Fang, Ganqing, Dongguan 523648 (CN); Zhang, Daliang, Dongguan 523648 (CN)
(74) Representative: Pfenning, Meinig & Partner mbB

(56) References cited:
- EP-A1- 3 831 649
- WO-A1-2022/068249
- DE-U1- 20 012 835
- JP-A- 2016 150 654

## Description

### TECHNICAL FIELD

The present invention relates to the technical field of baby carriers, and in particular to a baby carrier with a canopy and a locking mechanism thereof.

### BACKGROUND

In the existing baby carriers with canopies, the canopies may be divided into detachable and non-detachable ones. As for current baby carriers with detachable canopies, their disassembling structures are generally complex, and there is a problem that it is inconvenient to disassemble and assemble the canopies. Document DE 20012835 U1 discloses a device for fastening and holding parts for sun canopies, umbrellas, and covers for baby carriages, strollers, and the like. Document WO 2022/068249 A1 discloses a child safety seat canopy fixing structure and a child safety seat. Document EP 3831649 A1 discloses a child conveyance apparatus includes a child support portion having a canopy mount, a canopy installable on and removable from the child support portion. Document JP 2016150654 A discloses canopies, childcare equipment, strollers, child seats and pet carriers.

### SUMMARY

Based on this, it is necessary to provide a baby carrier and a locking mechanism thereof. The locking mechanism has a simple structure, and enables a user to easily lock and unlock the locking mechanism, thereby realizing assembly and disassembly of the canopy assembly. The invention is set out in the appended set of claims.

### BRIEF DESCRIPTION OF THE DRAWINGS

FIG. 1 is a schematic structural view of a baby carrier according to an embodiment of the present invention, where, a canopy assembly is in an unfolded state;
FIG. 2 is a schematic structural view of a locking mechanism, the canopy assembly and a head rest in FIG. 1 viewed from another visual angle;
FIG. 3 is a partial exploded view of the locking mechanism, the canopy assembly and the head rest in FIG. 2;
FIG. 4 is a partial exploded view of the locking mechanism, the canopy assembly and the head rest in FIG. 2 viewed from another visual angle;
FIG. 5 is a schematic structural view of the locking mechanism located on a side of the head rest of the baby carrier in FIG. 2, where, the locking mechanism is in an unlocked state;
FIG. 6 is an enlarged view of a portion A in FIG. 5;
FIG. 7 is a schematic structural view of the locking mechanism located on the side of the head rest of the baby carrier in FIG. 2, where, the locking mechanism is in a locked state, and an operating portion is in an unpressed state;
FIG. 8 is a schematic structural view of the locking mechanism located on the side of the head rest of the baby carrier in FIG. 2, where, the locking mechanism is in an unlocked state, and an operating portion is in a pressed state;
FIG. 9 is a sectional view of the baby carrier in FIG. 2, where, the locking mechanism is in the locked state;
FIG. 10 is an enlarged view of a portion B in FIG. 9;
FIG. 11 is a sectional view of the baby carrier in FIG. 2, in which the canopy assembly and an installing seat are removed;
FIG. 12 is an enlarged view of a portion C in FIG. 11;
FIG. 13 is a schematic structural view of the locking mechanism, the canopy assembly and the head rest viewed from another visual angle according to another embodiment;
FIG. 14 is an exploded view of FIG. 13;
FIG. 15 is an enlarged view of a portion D in FIG. 14;
FIG. 16 is a sectional view of FIG. 13; and
FIG. 17 is an enlarged view of a portion E in FIG. 16.

Reference signs:
100. carrier body, 110. seat portion, 120. head rest, 121. first housing, 1211. first through hole, 12111. notch, 122. second housing, 123. receiving cavity, 124. side of head rest, 200. canopy assembly, 210. first pivot seat, 211. first disc component, 2111. limiting groove, 212. first canopy connecting member, 2121. first slot, 220. first canopy strip, 230. second pivot seat, 231. second disc component, 2311. limiting protrusion, 232. second canopy connecting member, 2321. second slot, 233. second through hole, 240. second canopy strip, 250. canopy elastic member, 260. end cover, 270. pivot, 300. locking mechanism, 310. fixing seat, 311. fixing cover, 3111. limiting boss, 312. fixing body, 313. closing cover, 3131. guiding rib, 3132. second limiting part, 314. restoring member, 315. receiving hole, 3154. guiding groove, 3155. first limiting part, 316. locking groove, 3161. groove bottom, 3162. second groove wall, 3163. groove opening, 317. pushing face, 318. guiding slot, 3181. first groove wall, 319. locking opening, 320. installing seat, 321. operating portion, 3121. first segment, 31211. protruding block, 31212. rib, 3122. second segment, 322. inserting portion, 3221. inserting end, 3222. opening, 3223. opening wall, 323. elastic finger, 3231. elastic body, 3232. locking protrusion, 3233. connecting end, 3234. free end, 3235. guiding face, S. reference plane.

### DETAILED DESCRIPTION OF THE EMBODIMENTS

In order to make the objectives, technical solutions and advantages of the present invention clearer and better understood, the present invention will be further described in detail hereinafter in combination with the accompanying drawings and embodiments. It should be understood that the specific embodiments described herein are only used to explain the present invention, instead of limiting the present invention.

It should be noted that, when a component is defined to be "fixed on" another component, it may be disposed directly on the other component, or there may be an intermediate component therebetween. When a component is defined to be "connected to" another component, it may be directly connected to the other component or there may be an intermediate component therebetween. The terms "vertical", "horizontal", "left", "right", and the like used herein are for illustrative purposes only and do not represent the only implementation manner.

Unless otherwise defined, all technical and scientific terms used herein have the same meaning as commonly understood by those ordinary skill in the art of the invention. The terms in the description of the present invention are used for describing specific embodiments only, but not intended to limit the present invention. As used herein, the term "and/or" includes any combinations of one or more of the associated items listed.

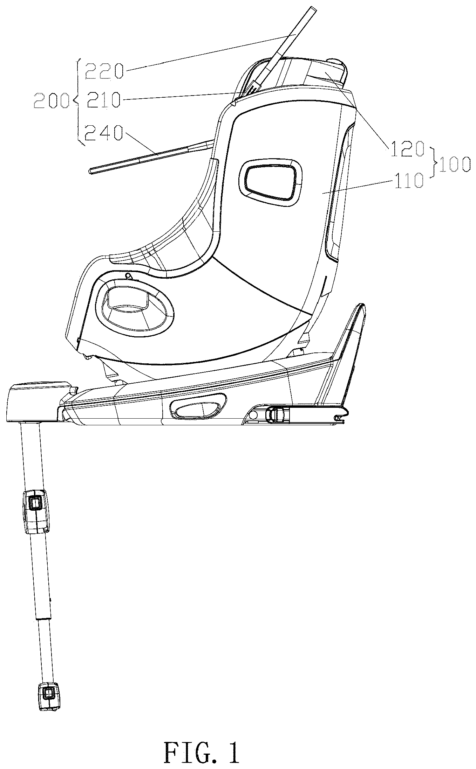

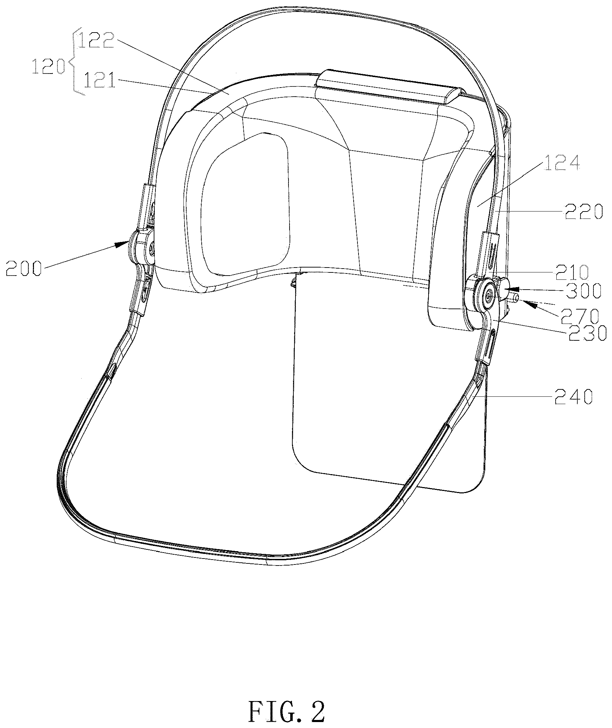

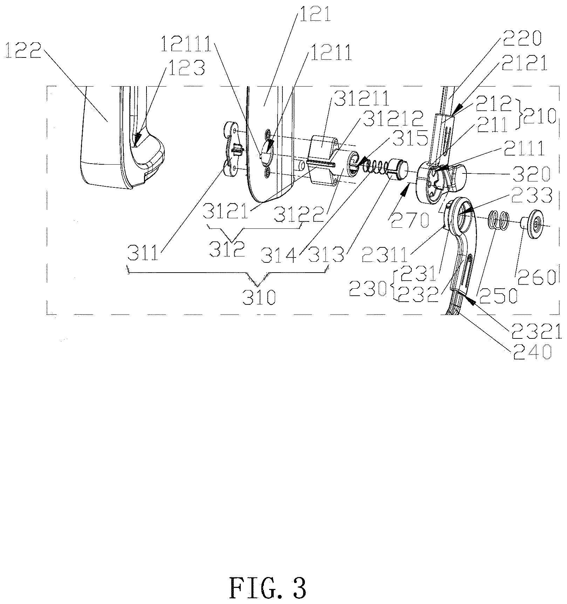

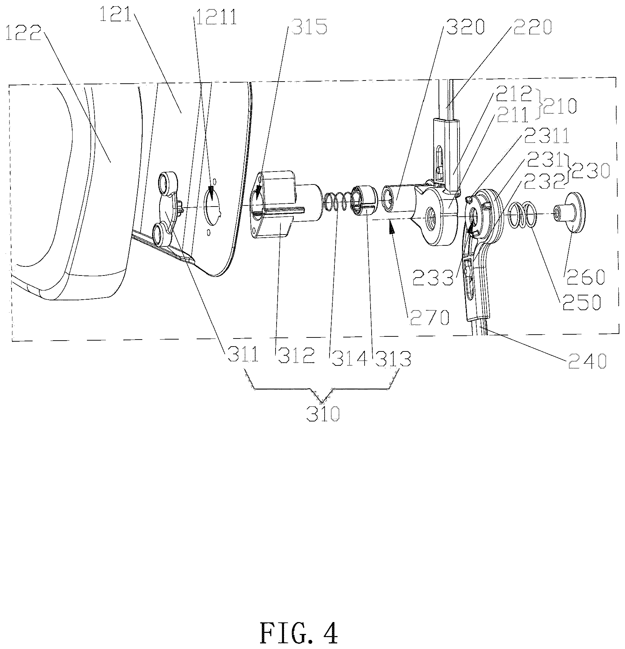

An embodiment of the present invention provides a baby carrier, such as a stroller, a safety seat of an automobile, etc. As shown in FIGS. 1 and 2, taking the safety seat of an automobile as an example, the baby carrier includes a carrier body 100, a canopy assembly 200 and a locking mechanism 300. The canopy assembly 200 is detachably connected to the carrier body 100 through the locking mechanism 300. Specifically, the carrier body 100 includes a seat portion 110 and a head rest 120 connected to the seat portion 110. The canopy assembly 200 is connected to a side 124 of the head rest 120 through the locking mechanism 300. Specifically, referring to FIGS. 3 and 4, the head rest 120 includes a first housing 121 and a second housing 122, and the first housing 121 and the second housing 122 enclose to form a receiving cavity 123.

Specifically, as shown in FIGS. 2 and 3, the canopy assembly 200 includes a first pivot seat 210, a first canopy strip 220, a second pivot seat 230, a second canopy strip 240, an elastic member of the canopy 250, an end cover 260 and a tarpaulin (not shown in figures).

Specifically, as shown in FIGS. 2 to 4, the first pivot seat 210 includes a first disc component 211 and a first canopy connecting member 212. One end of the first canopy connecting member 212 is connected to an outer periphery of the first disc component 211, and another end thereof has a first slot 2121. In this embodiment, there are two first pivot seats 210, and they are detachably installed on the left and right sides of the head rest 120, respectively. When the two first pivot seats 210 are installed on the left and right sides of the head rest 120, respectively, the groove openings of the first slots 2121 of the two first pivot seats 210 are both arranged obliquely upward. The first canopy strip 220 has a U-shaped structure, and two ends of the first canopy strip 220 may be inserted into the first slots 2121 of the two first pivot seats 210 on the left and right sides of the head rest 120, respectively. Since the groove openings of the two first slots 2121 are both arranged obliquely upward, the installed first canopy strip 220 also extends obliquely upward relative to the head rest 120.

Specifically, as shown in FIGS. 2 to 4, the second pivot seat 230 includes a second disc component 231 and a second canopy connecting member 232. One end of the second canopy connecting member 232 is connected to an outer periphery of the second disc component 231, and another end thereof has a second slot 2321. In this embodiment, there are also two second pivot seats 230, and the second disc components 231 of the two second pivot seats 230 may be pivotally connected to the first disc components 211 of the two first pivot seats 210, respectively. The second canopy strip 240 also has a U- shaped structure, and two ends of the second canopy strip 240 are inserted into the second slots 2321 of the two second pivot seats 230, respectively.

Specifically, as shown in FIGS. 3 and 4, a second through hole 233 is formed in the center of the second disc component 231, and part of the end cover 260 passes through the second through hole 233 and is connected to the first pivot seat 210, thus forming a pivot connection between the second pivot seat 230 and the first pivot seat 210. The tarpaulin cover is arranged outside the first canopy strip 220 and the second canopy strip 240 to perform functions of light-shielding, wind-shielding, and rain-proofing. When the canopy assembly 200 needs to be used, the second canopy strip 240 may be rotated in a direction away from the first canopy strip 220 through the cooperation (for example, a relative rotation) of the first pivot seat 210 and the second pivot seat 230, so that the tarpaulin covering between the first canopy strip 220 and the second canopy strip 240 is unfolded. When the canopy assembly 200 is not needed, the second canopy strip 240 may also be rotated in a direction close to the first canopy strip 220 through the cooperation (for example, a relative rotation) of the first pivot seat 210 and the second pivot seat 230, so that the tarpaulin covering between the canopy strip 220 and the second canopy strip 240 is folded, thereby greatly reducing the space occupied by the canopy assembly 200.

Further, taking the canopy assembly 200 located on one side of the head rest 120 as an example, the connection mechanism of the canopy assembly 200 will be described in detail. As shown in FIGS. 3 and 4, one of the first disc component 211 and the second disc component 231 may have a plurality of limiting grooves 2111, and the plurality of limiting grooves 2111 are arranged at intervals along a circumferential direction. The other one of the first disc component 211 and the second disc component 231 may be provided with a plurality of limiting protrusions 2311, and the plurality of limiting protrusions 2311 are arranged at intervals along the circumferential direction. The plurality of limiting protrusions 2311 may engage with the plurality of limiting grooves 2111, respectively, such that when an external force is exerted on the second pivot seat 230 or on the second canopy strip 240, the second pivot seat 230 rotates relative to the first pivot seat 210, and each limiting protrusion 2311 may be released from the originally engaged limiting groove 2111 and engage with another limiting groove 2111. When the external force is removed, the second pivot seat 230 may be fixed at different positions relative to the first pivot seat 210, thereby conveniently achieving the switching of the canopy assembly 200 between an unfolded state and a folded state and an adjustment of the unfolding angle of the canopy assembly 200. Further, a canopy elastic member 250 is provided between the second disc component 231 and the first disc component 211. The canopy elastic member 250 may be, for example, a torsion spring. The canopy elastic member 250 constantly makes the second pivot seat 230 pivot in a direction of folding the canopy assembly 200.

It should be noted that, in other embodiments, the first pivot seat 210 and the first canopy strip 220, and the second pivot seat 230 and the second canopy strip 240 are unnecessarily connected by means of insertion, and may also be connected by welding, riveting, etc. The first canopy strip 220 and the second canopy strip 240 are unnecessarily have a U-shaped structure, and may also have a structure of two straight rods arranged oppositely. Moreover, the end cover 260 and the canopy elastic member 250 are unnecessarily to be arranged between the first pivot seat 210 and the second pivot seat 230. In short, these structures are not limited in the present application, as long as the function of switching the canopy assembly 200 between the unfolded state and the folded state may be realized.

The present application provides a locking mechanism, applicable for detachably connecting a first object to a second object. As shown in FIGS. 2-3 or FIGS. 14-15, the locking mechanism includes a fixing seat 310 and an installing seat 320. The fixing seat 310 is connected to the first object, and the fixing seat 310 has a receiving hole 315 and a first locking part. The installing seat 320 is connected to the second object. The installing seat 320 has an inserting portion 322 and a second locking part connected to the inserting portion 322. The inserting portion 322 may be inserted into the receiving hole 315. When the inserting portion 322 is inserted into the receiving hole 315, the first locking part may engage with the second locking part to fix the inserting portion 322 inside the receiving hole 315, or may be released from the engagement so that the inserting portion 322 can be removed from the receiving hole 315. In some embodiments, the first object is the carrier body 100 of a baby carrier, and the second object is the canopy assembly 200 of the baby carrier.

Further, as shown in FIG. 2, there are two locking mechanisms 300. The first pivot seats 210 connected to two ends of the first canopy strip 220 are detachably connected to two sides of the head rest 120 through the two locking mechanisms 300, respectively, thereby ensuring the canopy assembly 200 to be firmly connected to the head rest 120 through the locking mechanisms 300. In some embodiments, one side 124 of the head rest 120 or a rear side of the head rest 120 may be provided with the locking mechanism 300. The rear side of the head rest 120 refers to one side of the head rest 120 facing away from a rider. One side, two sides, or the rear side of the seat portion 110 may be provided with the locking mechanism(s). The number and the connection positions of the locking mechanisms 300 are not limited in the present application, as long as the canopy assembly 200 may be detachably fixed on the carrier body 100. The application is described hereinafter by taking the locking mechanism 300 arranged on one side of the head rest 120 as an example.

The locking mechanism 300 may have various forms. For example, in an embodiment, as shown in FIGS. 3 and 4, the locking mechanism 300 includes a fixing seat 310 and an installing seat 320. The fixing seat 310 is connected to the side 124 of the head rest 120. The installing seat 320 is connected to the first pivot seat 210, and the installing seat 320 is arranged to deviate from the pivot 270 of the first pivot seat 210 and the second pivot seat 230. In some embodiments, the installing seat 320 may also be connected to the second pivot seat 230, and the installing seat 320 is arranged to deviate from the pivot 270 of the first pivot seat 210 and second pivot seat 230.

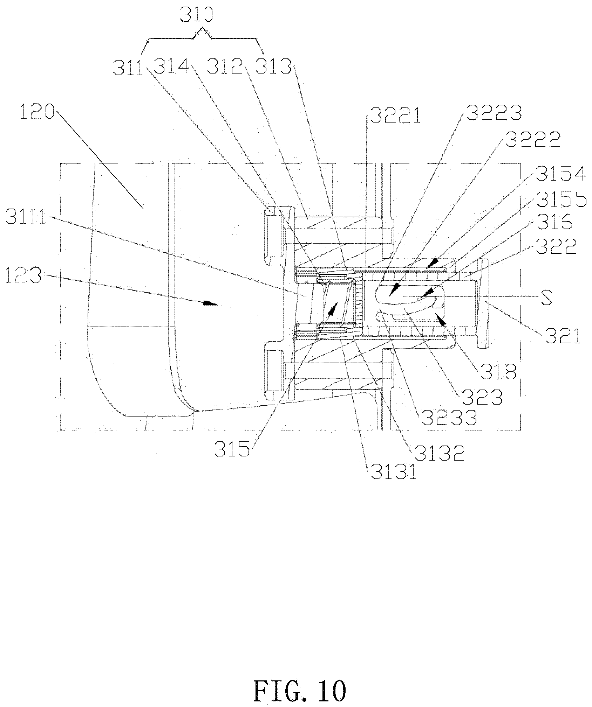

Further, as shown in FIGS. 3 and 4, the fixing seat 310 includes a fixing cover 311, a fixing body 312, a closing cover 313, and a restoring member 314. A receiving hole 315 is formed inside the fixing body 312 along a length direction thereof. The length direction of the fixing body 312 is substantially parallel to an insertion direction of the inserting portion 322 of the installing seat 320. In an embodiment, the receiving hole 315 is a through hole. In some embodiments, the fixing body 312 includes a first segment 3121 and a second segment 3122 that communicate with each other in the length direction. The fixing cover 311 is arranged on one end of the first segment 3121 of the fixing body 312, and a protruding block 31211 is arranged on the outer wall of the first segment 3121 of the fixing body 312 which is provided with the fixing cover 311. In an embodiment, two protruding blocks 31211 are arranged on the outer wall of the first segment 3121 of the fixing body 312 which is provided with the fixing cover 311. The first locking part is formed in a wall of the receiving hole 315 of the fixing body 312. In some embodiments, the first locking part is formed in the wall of the receiving hole 315 inside the second segment 3122 of the fixing body 312 away from the fixing cover 311. In some embodiments, the fixing cover 311 is arranged on the end of the first segment 3121 of the fixing body 312, that is, arranged on a first end of the fixing body 312, and forms a hole bottom of the receiving hole 315. The fixing cover 311 is located inside the receiving cavity 123, and the first end of the fixing body 312 is also located inside the receiving cavity 123. In some embodiments, the first housing 121 has a first through hole 1211, and the second segment 3122 of the fixing body 312 engages with the first through hole 1211. The second segment 3122 of the fixing body 312 is configured to pass through the first through hole 1211 from a side of the first housing 121 and extend from another side of the first housing 121. The protruding block 31211 arranged on the first segment 3121 of the fixing body 312 is configured to abut against the one side of the first housing 121, and is located between the fixing cover 311 and the first housing 121(as shown in FIG. 10). The fixing cover 311, the protruding block 31211 on the fixing body 312, and the first housing 121 each have a fixing hole at a corresponding position, and a first connector (not shown in the drawings) passes through the fixing holes in the first housing 121, the protruding block 31211, and the fixing cover 311 in sequence, thus fixing the fixing body 312 and the fixing cover 311 on the first housing 121. The first connecting member may be, for example, a bolt. In some embodiments, the fixing cover 311, the protruding block 31211 and the first housing 121 each have two fixing holes at corresponding positions, and accordingly, two first connecting members are provided. In some embodiments, in order to fix the fixing body 312 and the fixing cover 311 more stably on the first housing 121 and prevent the fixing body 312 from rotating along a circumferential direction of the first through hole 1211, a rib 31212 is arranged on the outer wall of the fixing body 312. The rib 31212 is configured to extend from the first end to the second end of the fixing body 312 along the length direction. The second end of the fixing body 312, namely, an end of the second segment 3122 of the fixing body 312, is arranged outside the receiving cavity 123. One end of the rib 31212, which is located on the second segment 3122, is closer to the second end of the fixing body 312 than the side wall of the protruding block 31211 adjacent to the second segment 3122 is. Accordingly, a notch 12111 is formed in a peripheral wall of the first through hole 1211. The notch 12111 is configured to engage with the rib 31212, and the rib 31212 is stuck by the notch 12111.

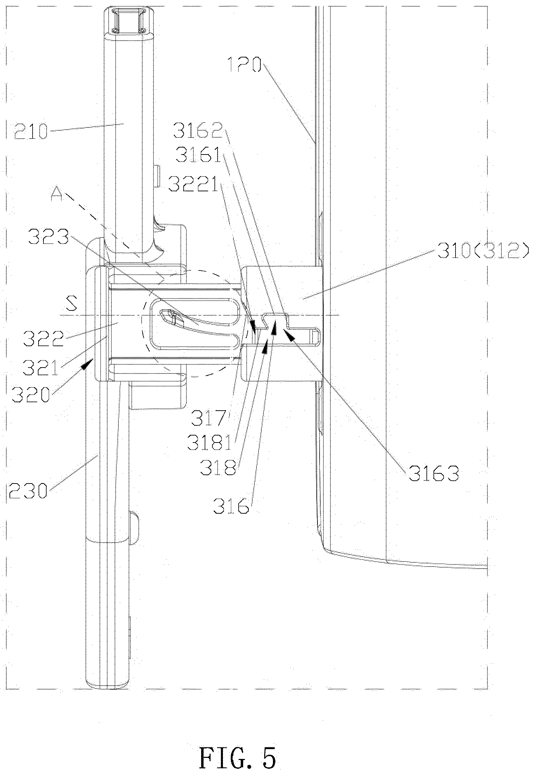

Further, referring to FIGS. 5 to 7, the first locking part is a locking groove 316 formed in the second segment 3122 of the fixing body 312. The receiving hole 315 extends along the length direction of the fixing body 312, that is, from the opening towards the hole bottom of the receiving hole 315 along an installation direction of the installing seat 320. The installation direction of the installing seat 320 is, for example, parallel to the pivot 270 of the first pivot seat 210 and the second pivot seat 230. A depth direction of the locking groove 316 extends from a groove opening 3163 to a groove bottom 3161 of the locking groove 316 approximately along a circumferential direction of the receiving hole 315. Specifically, the depth direction of the locking groove 316 is approximately perpendicular to the installation direction of the installing seat 320. The fixing body 312 has a pushing face 317. In some embodiments, the pushing face 317 is an inclined surface located at an opening edge of the receiving hole 315 and inclined towards the hole bottom of the receiving hole 315 and towards the inside of the receiving hole 315. The locking groove 316 is located at a side of the pushing face 317 proximate to the hole bottom of the receiving hole 315. The locking groove 316 has a second groove wall 3162. The second groove wall 3162 is located adjacent to the groove bottom 3161 of the locking groove 316, and located on a side proximate to the hole bottom of the receiving hole 315. A guiding slot 318 is formed in a side wall of the receiving hole 315 of the second segment 3122 of the fixing body 312. The slot opening of the guiding slot 318 is configured to run through the opening edge of the receiving hole 315. The guiding slot 318 extends approximately in a direction from the opening of the receiving hole 315 towards the hole bottom. The guiding slot 318 is in communication with the locking groove 316. The guiding slot 318 has a first groove wall 3181, and a groove opening 3163 of the locking groove 316 is formed in the first groove wall 3181. The first groove wall 3181 and the pushing face 317 are joined.

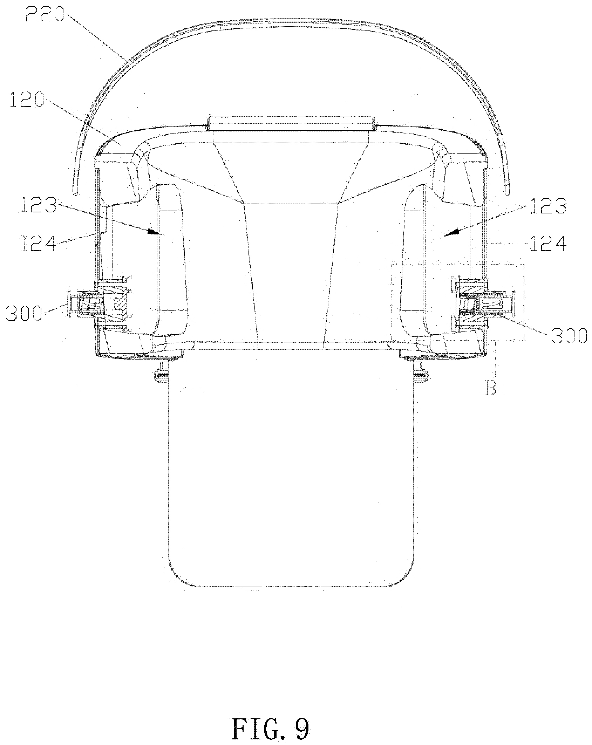

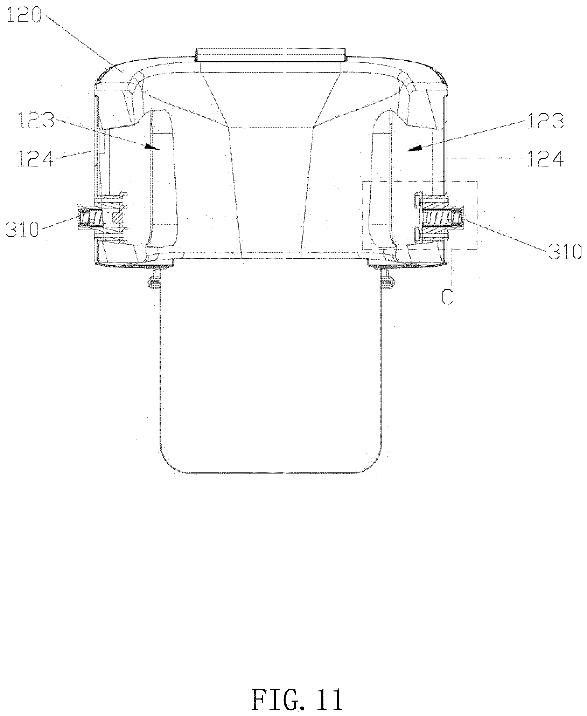

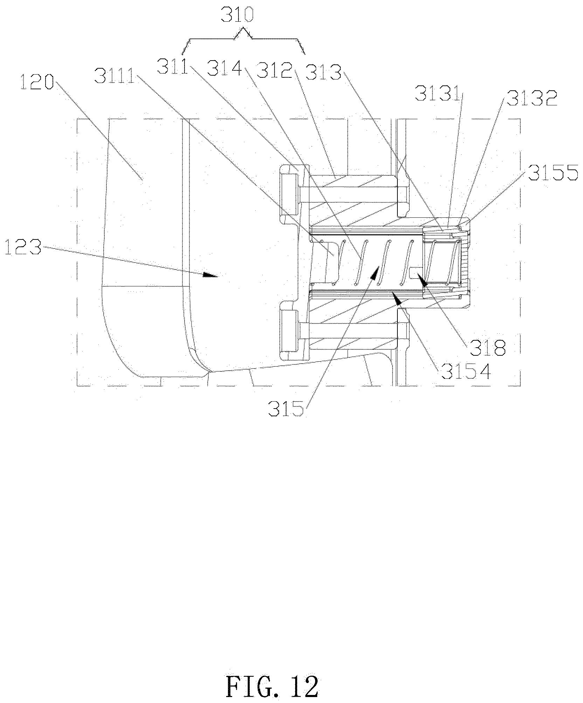

Referring to FIGS. 9 and 10, the closing cover 313 is movably arranged in the receiving hole 315. As shown in FIGS. 11 and 12, when the installing seat 320 is not connected to and engaged with the fixing seat 310, the closing cover 313 may close the opening of the receiving hole 315. The opening edge of the receiving hole 315 has a first limiting part 3155, and the closing cover 313 has a second limiting part 3132 that may abut against the first limiting part 3155, thereby preventing the closing cover 313 from falling out of the receiving hole 315. In some embodiments, the first limiting part 3155 and the second limiting part 3132 are both limiting bosses.

In some embodiments, referring to FIGS. 10 and 12, the closing cover 313 has a guiding rib 3131, and a guiding groove 3154 is formed on an inner wall of the receiving hole 315. The guiding rib 3131 is slidably arranged in the guiding groove 3154, so that the closing cover 313 can move inside the receiving hole 315 smoothly. In some embodiments, the guiding rib 3131 may be arranged on the inner wall of the receiving hole 315, and the guiding groove 3154 is formed on the closing cover 313, and the guiding rib 3131 may be slidably arranged in the guiding groove 3154.

Further, referring to FIGS. 10 and 12, the restoring member 314 is arranged inside the receiving hole 315, and located between the closing cover 313 and the fixing cover 311. The restoring member 314 constantly forces the closing cover 313 to move in the direction towards the opening of the receiving hole 315. The restoring member 314 is an elastic member, such as a spring or an elastic piece, etc. Further, as shown in FIG. 12, the fixing cover 311 is provided with a limiting boss 3111 protruding towards the receiving hole 315. One end of the restoring member 314 fits over the limiting boss 3111, and another end thereof abuts against the closing cover 313, thereby limiting the restoring member 314 within the receiving hole 315, and preventing the restoring member 314 from deviating. When the fixing seat 310 is not engaged with the installing seat 320, that is, when the canopy assembly 200 is not installed on the carrier body 100, the restoring member 314 pushes the closing cover 313 to a position of the opening of the receiving hole 315 to close the receiving hole 315, thereby preventing debris, dust, etc., from falling into the receiving hole 315, and preventing an adult's or infant's finger from accidentally getting stuck inside the receiving hole 315, and further making an overall appearance of the baby carrier more concise and beautiful.

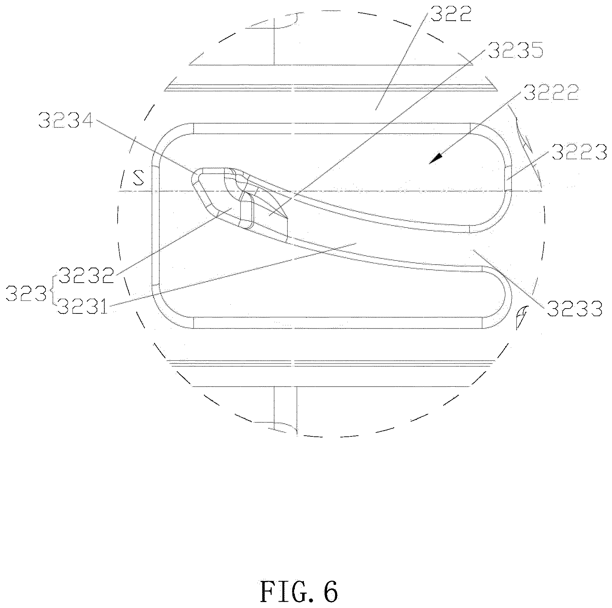

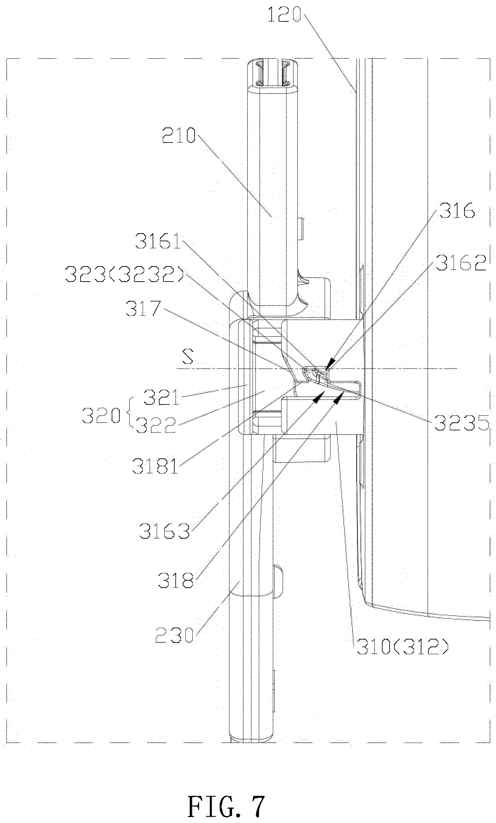

As shown in FIGS. 5 and 6, the installing seat 320 includes an operating portion 321, an inserting portion 322, and a second locking part connected to the inserting portion 322. In this embodiment, the second locking part is an elastic finger 323 that may engage with the locking groove 316. The operating portion 321 is connected to the first pivot seat 210. One end of the inserting portion 322 is connected to the operating portion 321, and another end of the inserting portion 322, namely the inserting end 3221, extends in a direction away from the operating portion 321. As shown in FIG. 7, the inserting portion 322 may be inserted into the receiving hole 315, and the operating portion 321 may abut against the opening of the receiving hole 315 to limit the distance that the inserting portion 322 moves in the receiving hole 315, and moreover, the operating portion 321 may be prevented from being pressed into the receiving hole 315. As shown in FIG. 7, the inserting portion 322 and the receiving hole 315 are configured to, when the inserting portion 322 is inserted into the receiving hole 315 and when the first locking part and the second locking part engage, make the inserting end 3221 of the inserting portion 322 and the hole bottom of the receiving hole 315 to be spaced apart, and make the opening of the receiving hole 315 and the operating portion 321 to be spaced apart as well. Through such a configuration, when the operating portion 321 is pushed to drive the inserting portion 322 to move towards the hole bottom of the receiving hole 315, the first locking part disengages from the second locking part.

Specifically, referring to FIGS. 4 and 5, the inserting portion 322 has a cylindrical structure, and is, for example, a cylinder or a cylindrical tube, and the receiving hole 315 is a cylindrical hole that may allow the insertion of the inserting portion 322 and engage with the inserting portion 322. The configuration of the cylinder or the cylindrical tube enables the inserting portion 322 to bear uniform forces. Referring to FIG. 6, the inserting portion 322 has a hollow cavity. An opening 3222 is formed in the cavity wall of the hollow cavity. One end of an elastic finger 323 is connected to an opening wall 3223 of the opening 3222, and there is a gap between another end of the elastic finger 323 and other opening walls of the opening 3222, thereby facilitating a deformation of the elastic finger 323. In some embodiments, the inserting portion 322 may not have a hollow cavity, but an open groove (not shown in the drawings) may be formed on a side wall of the inserting portion 322. The one end of the elastic finger 323 is connected to an edge of a groove opening of the open groove, and there is also a gap between the other end of the elastic finger 323 and a groove wall of the open groove, thereby facilitating the deformation of the elastic finger 323.

In some embodiments, the elastic finger 323 and the inserting portion 322 are integrally formed, thus increasing connection strength between the elastic finger 323 and the inserting portion 322, and facilitating a processing. In some embodiments, the elastic finger 323 and the inserting portion 322 may also be two independent components connected by welding, riveting, etc.

Further, referring to FIGS. 5 and 6, the elastic finger 323 includes an elastic body 3231 and a locking protrusion 3232 protruding from the elastic body 3231. The elastic body 3231 has a connecting end 3233 and a free end 3234. The connecting end 3233 is connected to an opening wall 3223 of the opening 3222 of the inserting portion 322. The free end 3234 is farther away from the inserting end 3221 of the inserting portion 322 than the connecting end 3233 is, and the free end 3234 obliquely extends outwards, namely in a direction away from the outer peripheral surface of the inserting portion 322. In this embodiment, the locking protrusion 3232 is arranged on the free end 3234. In some embodiments, the locking protrusion 3232 may also be arranged between the free end 3234 and the connecting end 3233.

Referring to FIGS. 5 and 6, a plane where the groove bottom 3161 of the locking groove 316 is located is defined as a reference plane S. When the inserting portion 322 is not inserted into the receiving hole 315, the elastic finger 323 is in a natural state, and the connecting end 3233 and at least part of the locking protrusion 3232 are located at two sides of the reference plane S respectively. For the convenience of description, one side of the reference plane S proximate to the groove opening 3163 of the locking groove 316 is defined as a first side, and another side of the reference plane S away from the groove opening 3163 of the locking groove 316 is defined as a second side. In this embodiment, in the process of inserting the inserting portion 322 into the receiving hole 315, the connecting end 3233 is located at the first side of the reference plane S, and at least part of the locking protrusion 3232 is located at the second side of the reference plane S. In some embodiments, the pushing face 317 is configured to, in the process of inserting the inserting portion 322 into the receiving hole 315 (as shown in FIG. 4), push the elastic finger 323 to force the free end 3234 to deviate in a direction from a groove bottom 3161 to a groove opening 3163 of the locking groove 316, namely, push the elastic finger 323 to force the free end 3234 to deviate towards the first side. In some embodiments, the pushing face 317 is configured to, in the process of inserting the inserting portion 322 into the receiving hole 315, the elastic finger 323 is pushed to deform, so that the locking protrusion 3232 is completely located at the first side of the reference plane S, thereby making the locking protrusion 3232 cross the pushing face 317 and enter the guiding slot 318. After entering the groove opening 3163 of the locking groove 316, and under an action of the elastic restoring force of the elastic finger 323, the locking protrusion 3232 has a tendency to restore to the original state, thereby engaging with the locking groove 316. In the process of inserting the inserting portion 322 of the installing seat 320 into the receiving hole 315, under the push of the pushing face 317, at least part of the elastic finger 323 enters the guiding slot 318, and the locking protrusion 3232 is fully located at the first side of the reference plane S. When the locking protrusion 3232 of the elastic finger 323 moves to the locking groove 316, the elastic finger 323 is released from the push of the pushing face 317 and from the push of the first groove wall 3181, and the elastic finger 323 has a tendency to restore to its original position under the action of its own elastic recovery force, thus getting locked in the locking groove 316. The guiding slot 318 enables the elastic finger 323 to enter the locking groove 316 more smoothly and to be locked in the locking groove 316. When the elastic finger 323 is locked in the locking groove 316, the groove bottom 3161 of the locking groove 316 exerts a force on the locking protrusion 3232 towards the first side of the reference plane S, and the elastic body 3231 exerts an elastic recovery force on the locking protrusion 3232 towards the second side of the reference plane S. These two forces balance each other so that the locking protrusion 3232 is locked tightly in the locking groove 316. The elastic body 3231 has an elastic force that constantly forces the locking protrusion 3232 to move towards the second side of the reference plane S.

Further, referring to FIGS. 5 and 6, the elastic body 3231 has a guiding face 3235. In this embodiment, the guiding face 3235 is a guiding slope connected between the locking protrusion 3232 and the elastic body 3231.In some embodiments, the guiding face 3235 may also be a guiding curved surface connected between the locking protrusion 3232 and the elastic body 3231. The second groove wall 3162 is configured to, after the locking protrusion 3232 is locked in the locking groove 316, and when the inserting portion 322 is pushed to continue to move towards the hole bottom of the receiving hole 315, push against the guiding face 3235 to cause the elastic finger 323 to deform, thus causing the free end 3234 provided with the locking protrusion 3232 to deviate towards the inside of the inserting portion 322, and to disengage from the locking groove 316. The guiding face 3235 may take a function of guiding a relative movement of the second groove wall 3162.

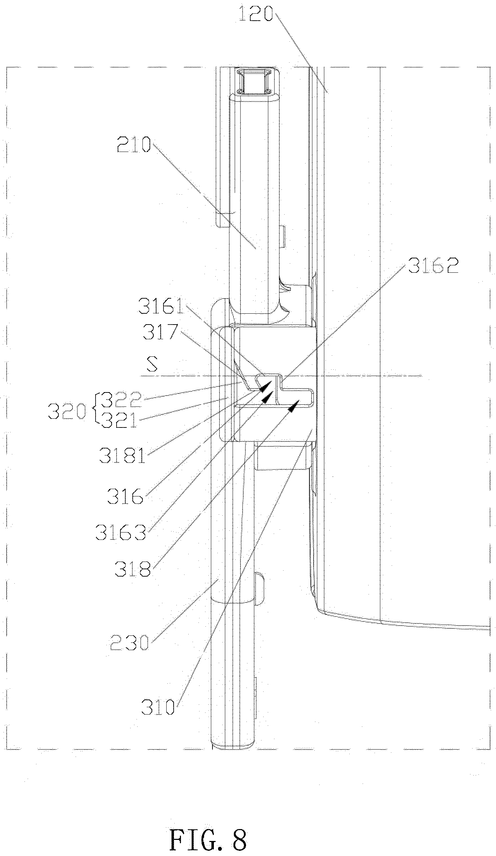

Specifically, as shown in FIGS. 7 and 8, when the inserting portion 322 has been inserted inside the receiving hole 315, and the locking protrusion 3232 engages with the locking groove 316, the operating portion 321 may be pushed to drive the inserting portion 322 to move towards the hole bottom of the receiving hole 315, so that the second groove wall 3162 may push against the guiding face 3235 to force the elastic finger 323 to deform towards the inside of the fixing seat 310, that is, deform inwards along a radial direction of the receiving hole 315, until the locking protrusion 3232 exits from the locking groove 316, as shown in FIG. 10. Currently, the elastic finger 323 is no longer pressed by the groove bottom 3161, and the locking protrusion 3232 moves towards the second side of the reference plane S under the elastic restoring force of the elastic body 3231. Referring to FIGS. 10 and 12, at this time, when the pushing force on the operating portion 321 is cancelled, since the locking protrusion 3232 disengages from the locking groove 316, the closing cover 313 moves towards the opening of the receiving hole 315 under the action of the restoring member 314, and the closing cover 313 abuts against the inserting portion 322 so that the inserting portion 322 moves in the same direction. In this case, since the locking protrusion 3232 is located at the second side of the reference plane S, even if the inserting portion 322 moves back to the position where the locking protrusion 3232 is originally locked in the locking groove 316, the locking protrusion 3232 will not be locked in the locking groove 316 again. In this embodiment, the extension direction of the receiving hole 315, that is, the direction from the opening of the receiving hole 315 to the hole bottom of the receiving hole 315, is approximately a horizontal direction when the baby carrier is in use. In this case, when the inserting portion 322 is inserted into the receiving hole 315, the gravity of the inserting portion 322 hardly has component forces in the extension direction of the receiving hole 315, thereby preventing the installing seat 320 and the fixing seat 310 from disengaging from each other due to factors such as a bumpy road and the weight of the canopy assembly 200 during the use of the baby carrier.

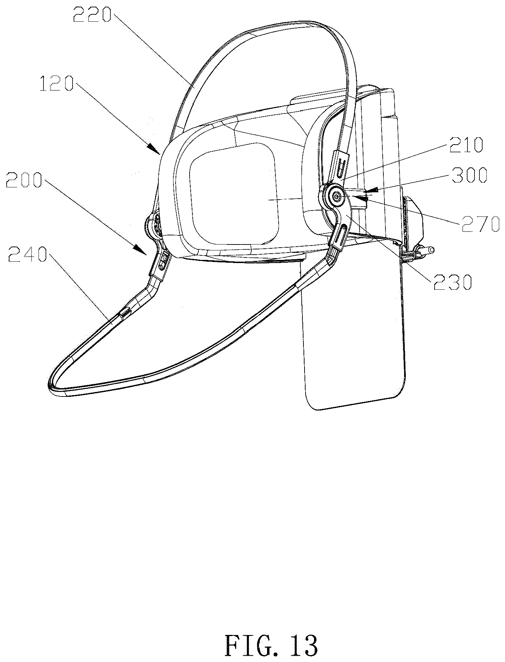

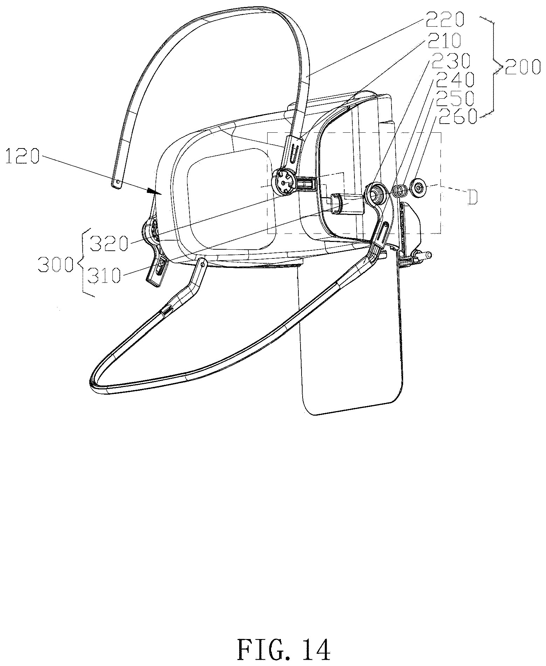

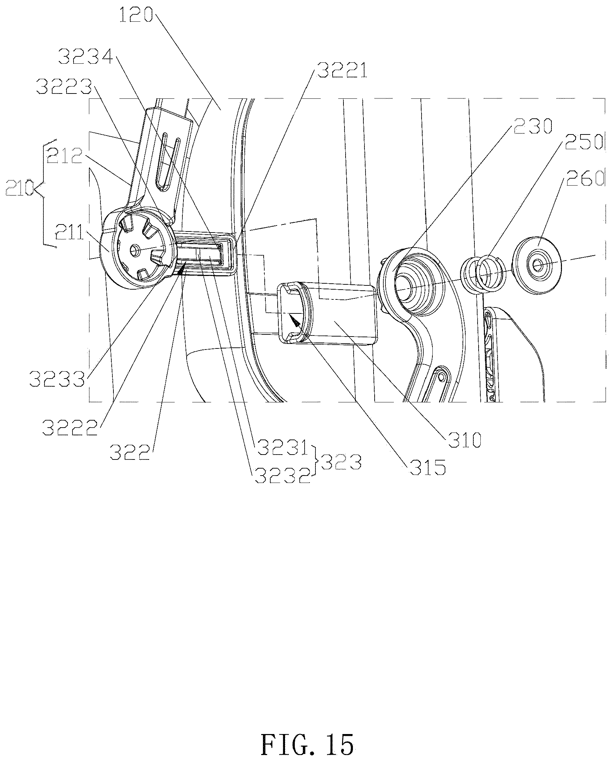

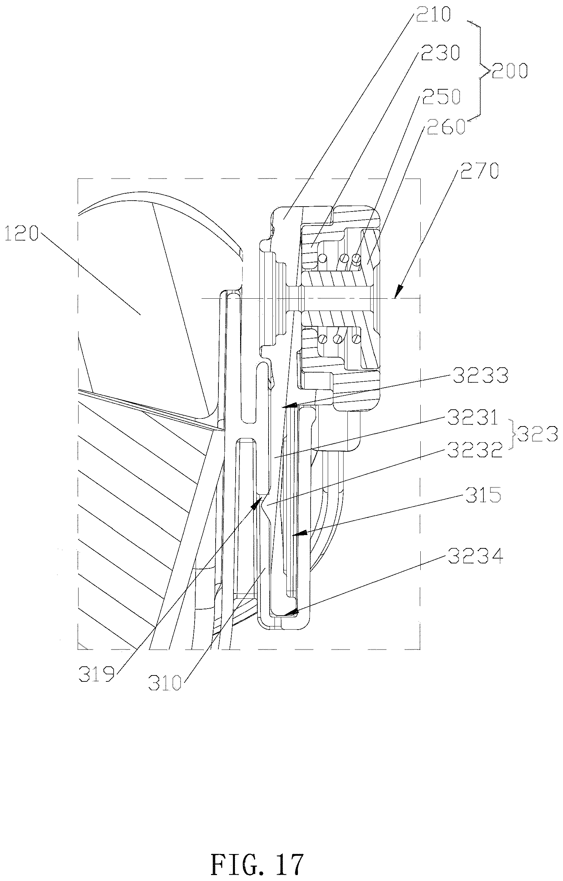

In some embodiments, as shown in FIGS. 13 and 14, the locking mechanism 300 includes a fixing seat 310 and an installing seat 320. The fixing seat 310 is connected to the carrier body 100, and the installing seat 320 is connected to the canopy assembly 200. As shown in FIG. 15, the fixing seat 310 has a receiving hole 315 and a first locking part. As shown in FIG. 17, in this embodiment, the first locking part is a locking opening 319 formed on a side wall of the receiving hole 315. As shown in FIG. 15, the installing seat 320 is provided with an inserting portion 322 and a second locking part connected to the inserting portion 322. The inserting portion 322 is capable of being inserted into the receiving hole 315. One end of the inserting portion 322 is connected to an outer periphery of the first disc component 211, and another end of the inserting portion 322 serves as an inserting end 3221 and extends in a direction away from the first disc component 211. The inserting portion 322 also has an opening 3222, and the second locking part is an elastic finger 323.

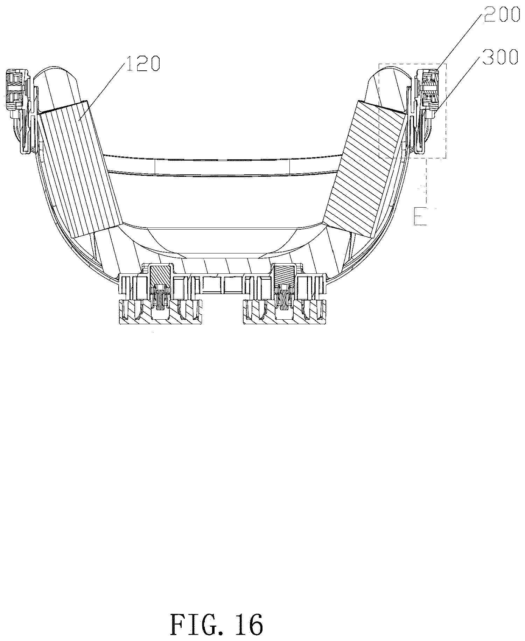

Specifically, as shown in FIGS. 15 to 17, the elastic finger 323 includes an elastic body 3231 and a locking protrusion 3232 protruding from the elastic body 3231. In order to enable the elastic body 3231 to be operated to deform, the elastic body 3231 has a connecting end 3233 and a free end 3234. The connecting end 3233 is connected to an opening wall 3223 of the opening 3222, and the free end 3234 is farther away from the first pivot seat 210 than the connecting end 3233 is. That is to say, the extension direction of the elastic body 3231 is approximately the same as the extension direction of the inserting portion 322. In this embodiment, the locking protrusion 3232 is arranged between the free end 3234 and the connecting end 3233. In other embodiments, the locking protrusion 3232 may also be arranged on the free end 3234. When the inserting portion 322 is inserted into the receiving hole 315, the first locking part may engage with the second locking part to fix the inserting portion 322 in the receiving hole 315. The locking protrusion 3232 is configured to, when the locking protrusion 3232 engages with the locking opening 319, be pressed by an inner surface of the hole wall of the receiving hole 315 to disengage from the locking opening 319. In some embodiments, as shown in FIG. 17, a section of the locking opening 319 is V-shaped. Correspondingly, a section of the locking protrusion 3232 is V-shaped. Such a configuration enables the locking protrusion 3232 to disengage from the locking opening 319 smoothly under a thrust of the inner wall surface of the receiving hole 315. In the locking mechanism 300 of this embodiment, the elastic finger 323 may be deformed by pressing the elastic body 3231 or the locking protrusion 3232, thereby causing the locking protrusion 3232 to exit from the locking opening 319 and disengage from the locking opening 319.

In some embodiments, the locking mechanism 300 is not only used for connecting the canopy assembly 200 and the carrier body 100. The locking mechanism 300 may also be used for connecting the first object such as a handle assembly (not shown in the drawings) and an armrest assembly (not shown in the drawings), and the second object such as a vehicle frame (not shown in the drawings) and a seat (not shown in the drawings), which is not limited in the present application.

The baby carrier and the locking mechanism thereof have at least the following technical effects.

In the embodiments of the present application, the first object and the second object are detachably connected through the locking mechanism 300. The inserting portion 322 is fixed in the receiving hole 315 by the locking mechanism 300 through the engagement between the first locking part and the second locking part to realize the engagement and the connection between the fixing seat 310 and the installing seat 320. When the first object and the second object need to be detached from each other, an operation is only needed to cause the first locking part and the second locking part to disengage, thus the fixing seat 310 and the installing seat 320 may be separated. The locking mechanism 300 of the present application has a simple structure and may be operated conveniently, and can realize the disassembly and the assembly of the first object (the carrier body) and the second object (the canopy assembly) conveniently.

## Claims

1. A locking mechanism (300), comprising:
a fixing seat (310) having a receiving hole (315) and a first locking part; and
an installing seat (320) having an inserting portion (322) and a second locking part connected to the inserting portion (322), the inserting portion (322) being configured to be inserted into the receiving hole (315);
wherein, the first locking part and the second locking part are configured to engage when the inserting portion (322) is inserted into the receiving hole (315);
**characterized in that** the fixing seat (310) further comprises:
a closing cover (313) movably arranged in the receiving hole (315); and
a restoring member (314) arranged between the closing cover (313) and a hole bottom of the receiving hole (315).

2. The locking mechanism according to claim 1, wherein the fixing seat (310) comprises a fixing seat body (312); the receiving hole (315) is formed inside the fixing body (312) along a length direction thereof; and the length direction of the fixing body (312) is substantially parallel to an insertion direction of the inserting portion (322) of the installing seat (320).

3. The locking mechanism according to claim 2, wherein the fixing body (312) comprises a first segment (3121) and a second segment (3122) communicating with each other through the receiving hole (315) in the length direction; the fixing seat (310) further comprises a detachably connected fixing cover (311), and the fixing cover (311) is arranged on an end of the first segment (3121) of the fixing body (312) and forms the hole bottom of the receiving hole (315).

4. The locking mechanism according to claim 2 or 3, wherein:
the first locking part is a locking groove (316) formed in a side wall of the receiving hole (315);
the second locking part is an elastic finger (323); the elastic finger (323) comprises an elastic body (3231); the elastic body (3231) has a connecting end (3233) and a free end (3234); and the connecting end (3233) is connected to the inserting portion (322); and
the fixing seat (310) further comprises a pushing face (317), and the pushing face (317) is configured to, in a process of inserting the inserting portion (322) into the receiving hole (315), push the elastic finger (323) to force the free end (3234) to deviate in a direction from a groove bottom (3161) to a groove opening (3163) of the locking groove (316).

5. The locking mechanism according to claim 4, wherein the pushing face (317) is an inclined surface located at an opening edge of the receiving hole (315) and inclined towards the hole bottom of the receiving hole (315) and towards an inside of the receiving hole (315).

6. The locking mechanism according to claim 4 or 5, wherein the locking groove (316) is located at a side of the pushing face (317) proximate to the hole bottom of the receiving hole (315); the locking groove (316) has a second groove wall (3162); the second groove wall (3162) is arranged adjacent to the groove bottom (3161) of the locking groove (316); and the second groove wall (3162) is located on a side of the locking groove (316) proximate to the hole bottom of the receiving hole (315).

7. The locking mechanism according to claim 6, wherein:
the free end (3234) is provided with a locking protrusion (3232);
a plane, where the groove bottom (3161) of the locking groove (316) is located, is defined as a reference plane (S); when the inserting portion (322) is not inserted into the receiving hole (315), the connecting end (3233) and at least part of the locking protrusion (3232) are located at a first side and a second side of the reference plane (S), respectively, wherein one side of the reference plane (S) proximate to the groove opening (3163) of the locking groove (316) is defined as the first side, and another side of the reference plane (S) away from the groove opening (3163) of the locking groove (316) is defined as the second side; and
the pushing face (317) is configured to, in the process of inserting the inserting portion (322) into the receiving hole (315), push the locking protrusion (3232) to move towards the first side of the reference plane (S).

8. The locking mechanism according to any one of claims 4 to 7, wherein a guiding slot (318) is formed in the side wall of the receiving hole (315); the guiding slot (318) is configured to run through an opening edge of the receiving hole (315); the guiding slot (318) is in communication with the locking groove (316); and the elastic finger (323) is configured to, in the process of inserting the inserting portion (322) into the receiving hole (315), enter the receiving hole (315) partially through the guiding slot (318);
wherein, optionally: the guiding slot (318) has a first groove wall (3181); the first groove wall (3181) and the pushing face (317) are joined; and a groove opening of the locking groove (316) is formed in the first groove wall (3181).

9. The locking mechanism according to any one of claims 4 to 8, wherein:
the inserting portion (322) is configured to be inserted into the receiving hole (315), and when the elastic finger (323) engages with the locking groove (316), the inserting portion (322) and the hole bottom of the receiving hole (315) are spaced apart; or
the free end (3234) is provided with a locking protrusion (3232), and at least part of the locking protrusion (3232) of the elastic finger (323) extends outwards relative to the connecting end (3233) in a direction away from an outer peripheral surface of the inserting portion (322).

10. The locking mechanism according to any one of claims 6 or 7, wherein the elastic body (3231) of the elastic finger (323) has a guiding face (3235), and the second groove wall (3162) is configured to, when the inserting portion (322) is pushed to continue to move towards the hole bottom of the receiving hole (315) after the free end (3234) of the elastic body (3231) is locked in the locking groove (316), push the guiding face (3225) to force the free end (3234) to deviate towards an inside of the inserting portion (322);
wherein, optionally: the free end (3234) is provided with a locking protrusion (3232); and the locking protrusion (3232) is configured to, in the process of inserting the inserting portion (322) into the receiving hole (315), engage with the locking groove (316); and the guiding face (3235) is a guiding slope or a guiding curved surface connected between the locking protrusion (3232) and the elastic body (3231).

11. The locking mechanism according to any one of claims 1 to 10, wherein the inserting portion (322) has a hollow cavity, and an opening (3222) is formed in a cavity wall of the hollow cavity; the second locking part is an elastic finger (323); and one end of the elastic finger (323) is connected to an opening wall of the opening (3222); or
the inserting portion (322) is a cylinder or a cylindrical tube, and the receiving hole (315) is a cylindrical hole that allows an insertion of the inserting portion (322) and engages with the inserting portion (322).

12. The locking mechanism according to claim 1, wherein an opening edge of the receiving hole (315) is provided with a first limiting part (3155), and the closing cover (313) is provided with a second limiting part (3132) abutting against the first limiting part (3155); or
one of an inner wall of the receiving hole (315) and the closing cover (313) has a guiding rib (3131); another of the inner wall of the receiving hole (315) and the closing cover (313) has a guiding groove (3154); and the guiding rib (3131) is slidingly arranged in the guiding groove (3154).

13. The locking mechanism according to any one of claims 1 to 12, wherein the first locking part is a locking opening (319) formed on a side wall of the receiving hole (315), the second locking part is an elastic finger (323); the elastic finger (323) has a locking protrusion (3232), and the locking protrusion (3232) is configured to, when the locking protrusion (3232) engages with the locking opening (319), disengage from the locking opening (319) under a thrust of an inner wall surface of the receiving hole (315).

14. A baby carrier, **characterized by** comprising: a carrier body (100), a canopy assembly (200), and the locking mechanism (300) of any one of claims 1 to 13;
wherein the fixing seat (310) is connected to the carrier body (100); the installing seat (320) is connected to the canopy assembly (200); and the canopy assembly (200) is detachably connected to the carrier body (100) through the locking mechanism (300).

## Patentansprüche

1. Verriegelungsmechanismus (300), umfassend:
einen Befestigungssitz (310) mit einem Aufnahmeloch (315) und einem ersten Verriegelungsteil; und
einen Installationssitz (320) mit einem Einführungsteil (322) und einem zweiten Verriegelungsteil, der mit dem Einführungsteil (322) verbunden ist, wobei der Einführungsteil (322) eingerichtet ist, in das Aufnahmeloch (315) eingeführt zu werden;
wobei der erste Verriegelungsteil und der zweite Verriegelungsteil eingerichtet sind, ineinander zu greifen, wenn der Einführungsteil (322) in das Aufnahmeloch (315) eingeführt wird;
**dadurch gekennzeichnet, dass** der Befestigungssitz (310) ferner umfasst:
eine Verschlusskappe (313), die beweglich in dem Aufnahmeloch (315) angeordnet ist; und
ein Rückstellelement (314), das zwischen der Verschlusskappe (313) und einem Lochgrund des Aufnahmelochs (315) angeordnet ist.

2. Verriegelungsmechanismus gemäß Anspruch 1, wobei der Befestigungssitz (310) einen Befestigungssitzkörper (312) umfasst; das Aufnahmeloch (315) innerhalb des Befestigungskörpers (312) entlang einer Längsrichtung desselben ausgebildet ist; und die Längsrichtung des Befestigungskörpers (312) im Wesentlichen parallel zu einer Einführrichtung des Einführungsteils (322) des Installationssitzes ist (320).

3. Verriegelungsmechanismus gemäß Anspruch 2, wobei der Befestigungskörper (312) ein erstes Segment (3121) und ein zweites Segment (3122) umfasst, die über das Aufnahmeloch (315) in Längsrichtung miteinander verbunden sind; der Befestigungssitz (310) ferner eine lösbar verbundene Befestigungsabdeckung (311) umfasst und die Befestigungsabdeckung (311) an einem Ende des ersten Segments (3121) des Befestigungskörpers (312) angeordnet ist und den Lochgrund des Aufnahmelochs (315) bildet.

4. Verriegelungsmechanismus nach Anspruch 2 oder 3, wobei:
der erste Verriegelungsbolzen eine Verriegelungsnut (316) ist, die in einer Seitenwand des Aufnahmelochs (315) ausgebildet ist;
der zweite Verriegelungsbolzen ein elastischer Finger (323) ist; der elastische Finger (323) einen elastischen Körper (3231) umfasst; der elastische Körper (3231) ein Verbindungsende (3233) und ein freies Ende (3234) aufweist; und das Verbindungsende (3233) mit dem Einführungsteil (322) verbunden ist; und
der Befestigungssitz (310) ferner eine Schubfläche (317) umfasst, und die Schubfläche (317) eingerichtet ist, während des Einführens des Einführungsteils (322) in das Aufnahmeloch (315) den elastischen Finger (323) zu drücken, um das freie Ende (3234) zu zwingen, in einer Richtung von einem Nutgrund (3161) zu einer Nutöffnung (3163) der Verriegelungsnut (316) abzulenken.

5. Verriegelungsmechanismus gemäß Anspruch 4, wobei die Schubfläche (317) eine geneigte Fläche ist, die sich an einer Öffnungskante des Aufnahmelochs (315) befindet und zum Lochgrund des Aufnahmelochs (315) und zur Innenseite des Aufnahmelochs (315) hin geneigt ist.

6. Verriegelungsmechanismus gemäß Anspruch 4 oder 5, wobei sich die Verriegelungsnut (316) an einer Seite der Schubfläche (317) in der Nähe des Lochgrunds des Aufnahmelochs (315) befindet; die Verriegelungsnut (316) eine zweite Nutwand (3162) aufweist; die zweite Nutwand (3162) benachbart zum Nutgrund (3161) der Verriegelungsnut (316) angeordnet ist; und die zweite Nutwand (3162) an einer Seite der Verriegelungsnut (316) nahe dem Lochgrund des Aufnahmelochs (315) angeordnet ist.

7. Verriegelungsmechanismus nach Anspruch 6, wobei:
das freie Ende (3234) mit einem Verriegelungsvorsprung (3232) versehen ist;
eine Ebene, in der sich der Nutgrund (3161) der Verriegelungsnut (316) befindet, als Bezugsebene (S) definiert ist; wenn der Einführungsteil (322) nicht in das Aufnahmeloch (315) eingeführt ist, befinden sich das Verbindungsende (3233) und mindestens ein Teil des Verriegelungsvorsprungs (3232) jeweils auf einer ersten Seite und einer zweiten Seite der Bezugsebene (S), wobei eine Seite der Bezugsebene (S) in der Nähe der Nutöffnung (3163) der Verriegelungsnut (316) als erste Seite definiert ist und eine andere Seite der Bezugsebene (S) entfernt von der Nutöffnung (3163) der Verriegelungsnut (316) als zweite Seite definiert ist; und
die Schubfläche (317) eingerichtet ist, beim Einführen des Einführungsteils (322) in das Aufnahmeloch (315) den Verriegelungsvorsprung (3232) zu drücken, damit dieser sich in Richtung der ersten Seite der Bezugsebene (S) bewegt.

8. Verriegelungsmechanismus gemäß einem der Ansprüche 4 bis 7, wobei ein Führungsschlitz (318) in der Seitenwand des Aufnahmelochs (315) ausgebildet ist; der Führungsschlitz (318) eingerichtet ist, durch eine Öffnungskante des Aufnahmelochs (315) zu verlaufen; der Führungsschlitz (318) mit der Verriegelungsnut (316) in Verbindung steht; und der elastische Finger (323) eingerichtet ist, beim Einführen des Einführungsteils (322) in das Aufnahmeloch (315) teilweise durch den Führungsschlitz (318) in das Aufnahmeloch (315) einzutreten;
wobei optional: der Führungsschlitz (318) eine erste Nutwand (3181) aufweist; die erste Nutwand (3181) und die Schubfläche (317) miteinander verbunden sind; und eine Nutöffnung der Verriegelungsnut (316) in der ersten Nutwand (3181) ausgebildet ist.

9. Verriegelungsmechanismus nach einem der Ansprüche 4 bis 8, wobei:
der Einführungsteil (322) eingerichtet ist, in das Aufnahmeloch (315) eingeführt zu werden, und wenn der elastische Finger (323) in die Verriegelungsnut (316) eingreift, der Einführungsteil (322) und der Lochgrund des Aufnahmelochs (315) voneinander beabstandet sind; oder
das freie Ende (3234) ist mit einem Verriegelungsvorsprung (3232) versehen, und mindestens ein Teil des Verriegelungsvorsprungs (3232) des elastischen Fingers (323) erstreckt sich relativ zum Verbindungsende (3233) in einer Richtung nach außen, weg von einer Außenumfangsfläche des Einführungsteils (322).

10. Verriegelungsmechanismus gemäß einem der Ansprüche 6 oder 7, wobei der elastische Körper (3231) des elastischen Fingers (323) eine Führungsfläche (3235) aufweist und die zweite Nutwand (3162) eingerichtet ist, wenn der Einführungsteil (322) gedrückt wird, um sich weiter in Richtung des Lochgrunds des Aufnahmelochs (315) zu bewegen, nachdem das freie Ende (3234) des elastischen Körpers (3231) in der Verriegelungsnut (316) verriegelt ist, die Führungsfläche (3235) zu drücken, um das freie Ende (3234) zu zwingen, in Richtung einer Innenseite des Einführungsteils (322) auszuweichen;
wobei optional: das freie Ende (3234) mit einem Verriegelungsvorsprung (3232) versehen ist; und der Verriegelungsvorsprung (3232) eingerichtet ist, beim Einführen des Einführungsteils (322) in das Aufnahmeloch (315) in die Verriegelungsnut (316) einzugreifen; und die Führungsfläche (3235) eine Führungsschräge oder eine gekrümmte Führungsfläche ist, die zwischen dem Verriegelungsvorsprung (3232) und dem elastischen Körper (3231) verbunden ist.

11. Verriegelungsmechanismus gemäß einem der Ansprüche 1 bis 10, wobei der Einführungsteil (322) einen Hohlraum aufweist und eine Öffnung (3222) in einer Hohlwand des Hohlraums ausgebildet ist; der zweite Verriegelungsteil ein elastischer Finger (323) ist; und ein Ende des elastischen Fingers (323) mit einer Wand der Öffnung (3222) verbunden ist; oder
der Einführungsteil (322) ist ein Zylinder oder ein zylindrisches Rohr, und das Aufnahmeloch (315) ist eine zylindrische Öffnung, die ein Einführen des Einführungsteils (322) ermöglicht und mit dem Einführungsteil (322) in Eingriff steht.

12. Verriegelungsmechanismus gemäß Anspruch 1, wobei eine Öffnungskante des Aufnahmelochs (315) mit einem ersten Begrenzungsteil (3155) versehen ist und die Verschlusskappe (313) mit einem zweiten Begrenzungsteil (3132) versehen ist, das an das erste Begrenzungsteil (3155) anstößt; oder
eine der Innenwände des Aufnahmelochs (315) und der Verschlusskappe (313) eine Führungsrippe (3131) aufweist; eine andere der Innenwände des Aufnahmelochs (315) und die Verschlusskappe (313) eine Führungsnut (3154) aufweist; und die Führungsrippe (3131) gleitend in der Führungsnut angeordnet (3154) ist.

13. Verriegelungsmechanismus gemäß einem der Ansprüche 1 bis 12, wobei das erste Verriegelungsteil eine Verriegelungsöffnung (319) ist, die an einer Seitenwand des Aufnahmelochs (315) ausgebildet ist, das zweite Verriegelungsteil ein elastischer Finger (323) ist; der elastische Finger (323) einen Verriegelungsvorsprung (3232) aufweist und der Verriegelungsvorsprung (3232) eingerichtet ist, wenn der Verriegelungsvorsprung (3232) in die Verriegelungsöffnung (319) eingreift, sich unter dem Druck einer Innenwandfläche des Aufnahmelochs (315) aus der Verriegelungsöffnung (319) zu lösen.

14. Babytransportvorrichtung, **gekennzeichnet durch**: einen Tragekörper (100), eine Verdeckanordnung (200) und den Verriegelungsmechanismus (300) gemäß einem der Ansprüche 1 bis 13;
wobei der Befestigungssitz (310) mit dem Trägerkörper (100) verbunden ist; der Installationssitz (320) mit der Verdeckanordnung (200) verbunden ist; und die Verdeckanordnung (200) über den Verriegelungsmechanismus (300) lösbar mit dem Trägerkörper (100) verbunden ist.

## Revendications

1. Mécanisme de verrouillage (300), comprenant :
un siège de fixation (310) qui comporte un trou de réception (315) et une première partie de verrouillage ; et
un siège d'installation (320) qui comporte une section d'insertion (322) et une seconde partie de verrouillage qui est connectée à la section d'insertion (322), la section d'insertion (322) étant configurée pour être insérée à l'intérieur du trou de réception (315) ;
dans lequel la première partie de verrouillage et la seconde partie de verrouillage sont configurées pour être engagées lorsque la section d'insertion (322) est insérée à l'intérieur du trou de réception (315) ;
**caractérisé en ce que** le siège de fixation (310) comprend en outre :
un capuchon de fermeture (313) qui est agencé de façon mobile et amovible dans le trou de réception (315) ; et
un élément de rappel (314) qui est agencé entre le capuchon de fermeture (313) et un fond de trou du trou de réception (315).

2. Mécanisme de verrouillage selon la revendication 1, dans lequel le siège de fixation (310) comprend un corps de siège de fixation (312) ; le trou de réception (315) est formé à l'intérieur du corps de siège de fixation (312) suivant sa direction de longueur ; et la direction de longueur du corps de siège de fixation (312) est sensiblement parallèle à une direction d'insertion de la section d'insertion (322) du siège d'installation (320).

3. Mécanisme de verrouillage selon la revendication 2, dans lequel le corps de siège de fixation (312) comprend un premier segment (3121) et un second segment (3122) qui communiquent l'un avec l'autre par l'intermédiaire du trou de réception (315) dans la direction de longueur ; le siège de fixation (310) comprend en outre un capuchon de fixation (311) connecté de façon libérable, et le capuchon de fixation (311) est agencé sur une extrémité du premier segment (3121) du corps de siège de fixation (312) et forme le fond de trou du trou de réception (315).

4. Mécanisme de verrouillage selon la revendication 2 ou 3, dans lequel :
la première partie de verrouillage est une gorge de verrouillage (316) qui est formée dans une paroi latérale du trou de réception (315) ;
la seconde partie de verrouillage est un doigt élastique (323) ; le doigt élastique (323) comprend un corps élastique (3231) ; le corps élastique (3231) comporte une extrémité de connexion (3233) et une extrémité libre (3234) ; et l'extrémité de connexion (3233) est connectée à la section d'insertion (322) ; et
le siège de fixation (310) comprend en outre une face de poussée (317), et la face de poussée (317) est configurée pour, lors d'un processus d'insertion de la section d'insertion (322) à l'intérieur du trou de réception (315), pousser le doigt élastique (323) pour provoquer la déviation de l'extrémité libre (3234) dans une direction depuis un fond de gorge (3161) jusqu'à une ouverture de gorge (3163) de la gorge de verrouillage (316).

5. Mécanisme de verrouillage selon la revendication 4, dans lequel la face de poussée (317) est une surface inclinée qui est localisée au niveau d'un bord d'ouverture du trou de réception (315) et qui est inclinée en direction du fond de trou du trou de réception (315) et en direction d'un intérieur du trou de réception (315).

6. Mécanisme de verrouillage selon la revendication 4 ou 5, dans lequel la gorge de verrouillage (316) est localisée au niveau d'un côté de la face de poussée (317) de façon proximale par rapport au fond de trou du trou de réception (315) ; la gorge de verrouillage (316) comporte une seconde paroi de gorge (3162) ; la seconde paroi de gorge (3162) est agencée de telle sorte qu'elle soit adjacente au fond de gorge (3161) de la gorge de verrouillage (316) ; et la seconde paroi de gorge (3162) est localisée sur un côté de la gorge de verrouillage (316) de façon proximale par rapport au fond de trou du trou de réception (315).

7. Mécanisme de verrouillage selon la revendication 6, dans lequel :
l'extrémité libre (3234) est munie d'une protubérance de verrouillage (3232) ;
un plan, au niveau duquel le fond de gorge (3161) de la gorge de verrouillage (316) est localisé, est défini en tant que plan de référence (S) ; lorsque la section d'insertion (322) n'est pas insérée à l'intérieur du trou de réception (315), l'extrémité de connexion (3233) et au moins une partie de la protubérance de verrouillage (3232) sont respectivement localisées au niveau d'un premier côté et d'un second côté du plan de référence (S), dans lequel un côté du plan de référence (S) qui est proximal par rapport à l'ouverture de gorge (3163) de la gorge de verrouillage (316) est défini en tant que premier côté et un autre côté du plan de référence (S) à distance de l'ouverture de gorge (3163) de la gorge de verrouillage (316) est défini en tant que second côté ; et
la face de poussée (317) est configurée pour, lors du processus d'insertion de la section d'insertion (322) à l'intérieur du trou de réception (315), pousser la protubérance de verrouillage (3232) de telle sorte qu'elle soit déplacée en direction du premier côté du plan de référence (S).

8. Mécanisme de verrouillage selon l'une quelconque des revendications 4 à 7, dans lequel une fente de guidage (318) est formée dans la paroi latérale du trou de réception (315) ; la fente de guidage (318) est configurée de telle sorte qu'elle chemine au travers d'un bord d'ouverture du trou de réception (315) ; la fente de guidage (318) est en communication avec la gorge de verrouillage (316) ; et le doigt élastique (323) est configuré pour, lors du processus d'insertion de la section d'insertion (322) à l'intérieur du trou de réception (315), entrer à l'intérieur du trou de réception (315) partiellement au travers de la fente de guidage (318) ;
dans lequel, en option, la fente de guidage (318) comporte une première paroi de gorge (3181) ; la première paroi de gorge (3181) et la face de poussée (317) sont jointes ; et une ouverture de gorge de la gorge de verrouillage (316) est formée dans la première paroi de gorge (3181).

9. Mécanisme de verrouillage selon l'une quelconque des revendications 4 à 8, dans lequel :
la section d'insertion (322) est configurée pour être insérée à l'intérieur du trou de réception (315), et lorsque le doigt élastique (323) est engagé avec la gorge de verrouillage (316), la section d'insertion (322) et le fond de trou du trou de réception (315) sont espacés l'un de l'autre ; ou dans lequel :
l'extrémité libre (3234) est munie d'une protubérance de verrouillage (3232) et au moins une partie de la protubérance de verrouillage (3232) du doigt élastique (323) est étendue vers l'extérieur par rapport à l'extrémité de connexion (3233) dans une direction d'éloignement par rapport à une surface périphérique externe de la section d'insertion (322).

10. Mécanisme de verrouillage selon l'une quelconque des revendications 6 ou 7, dans lequel le corps élastique (3231) du doigt élastique (323) comporte une face de guidage (3235), et la seconde paroi de gorge (3162) est configurée pour, lorsque la section d'insertion (322) est poussée de telle sorte qu'elle continue à être déplacée en direction du fond de trou du trou de réception (315) après que l'extrémité libre (3234) du corps élastique (3231) est verrouillée dans la gorge de verrouillage (316), pousser la face de guidage (3235) pour provoquer la déviation de l'extrémité libre (3234) en direction d'un intérieur de la section d'insertion (322) ; dans lequel, en option :
l'extrémité libre (3234) est munie d'une protubérance de verrouillage (3232) ; et la protubérance de verrouillage (3232) est configurée pour, lors du processus d'insertion de la section d'insertion (322) à l'intérieur du trou de réception (315), être engagée avec la gorge de verrouillage (316), et la face de guidage (3235) est une surface en pente de guidage ou une surface incurvée de guidage qui est connectée entre la protubérance de verrouillage (3232) et le corps élastique (3231).

11. Mécanisme de verrouillage selon l'une quelconque des revendications 1 à 10, dans lequel la section d'insertion (322) comporte une cavité creuse, et une ouverture (3222) est formée dans une paroi de cavité de la cavité creuse ; la seconde partie de verrouillage est un doigt élastique (323) ; et une extrémité du doigt élastique (323) est connectée à une paroi d'ouverture de l'ouverture (3222) ; ou dans lequel :
la section d'insertion (322) est un cylindre ou un tube cylindrique, et le trou de réception (315) est un trou cylindrique qui permet une insertion de la section d'insertion (322) et qui est engagé avec la section d'insertion (322).

12. Mécanisme de verrouillage selon la revendication 1, dans lequel un bord d'ouverture du trou de réception (315) est muni d'une première partie de limitation (3155), et le capuchon de fermeture (313) est muni d'une seconde partie de limitation (3132) qui vient en butée contre la première partie de limitation (3155) ; ou dans lequel :
un élément constitutif parmi une paroi interne du trou de réception (315) et le capuchon de fermeture (313) comporte une nervure de guidage (3131) ; l'autre élément parmi la paroi interne du trou de réception (315) et le capuchon de fermeture (313) comporte une gorge de guidage (3154) ; et la nervure de guidage (3131) est agencée de façon coulissante dans la gorge de guidage (3154).

13. Mécanisme de verrouillage selon l'une quelconque des revendications 1 à 12, dans lequel la première partie de verrouillage est une ouverture de verrouillage (319) qui est formée sur une paroi latérale du trou de réception (315) et la seconde partie de verrouillage est un doigt élastique (323) ; le doigt élastique (323) comporte une protubérance de verrouillage (3232), et la protubérance de verrouillage (3232) est configurée pour, lorsque la protubérance de verrouillage (3232) est engagée avec l'ouverture de verrouillage (319), être désengagée de l'ouverture de verrouillage (319) sous l'effet d'une impulsion de poussée d'une surface de paroi interne du trou de réception (315).

14. Porte-bébé, **caractérisé en ce qu'**il comprend un corps de porte-bébé (100), un assemblage de canopy (200) et le mécanisme de verrouillage (300) selon l'une quelconque des revendications 1 à 13 ;
dans lequel le siège de fixation (310) est connecté au corps de porte-bébé (100) ; le siège d'installation (320) est connecté à l'assemblage de canopy (200) ; et l'assemblage de canopy (200) est connecté de façon libérable au corps de porte-bébé (100) par l'intermédiaire du mécanisme de verrouillage (300).
